# EUROPÄISCHE PATENTSCHRIFT

(11) **EP 2 630 734 B1**
(45) Veröffentlichungstag und Bekanntmachung des Hinweises auf die Patenterteilung: **13.08.2014**
(21) Anmeldenummer: 11773456.6
(22) Anmeldetag: 20.10.2011
(51) Int. Cl.: H04B 3/56, B60L 11/18, H04B 3/54

(54) **ELEKTRISCHE VORRICHTUNG FÜR EIN POWERLINE-SYSTEM ZUR DATENÜBERTRAGUNG UND POWERLINE-SYSTEM ZUR DATENÜBERTRAGUNG**
ELECTRICAL DEVICE FOR A POWERLINE SYSTEM FOR DATA TRANSMISSION AND POWERLINE SYSTEM FOR DATA TRANSMISSION
DISPOSITIF ÉLECTRIQUE POUR UN SYSTÈME À COURANTS PORTEURS POUR LA TRANSMISSION DE DONNÉES ET SYSTÈME À COURANTS PORTEURS CORRESPONDANT POUR LA TRANSMISSION DE DONNÉES

(30) Priorität: 20.10.2010 DE 102010042720
(43) Veröffentlichungstag der Anmeldung: 28.08.2013
(73) Patentinhaber: Bayerische Motoren Werke Aktiengesellschaft, 80809 München (DE)
(72) Erfinder: HERZOG, Torsten, 80796 München (DE); WEBER, Robert, 83727 Schliersee (DE); BOGENBERGER, Richard, 82067 Ebenhausen (DE); SIEGL, Winfried, 92339 Beilngries (DE)
(86) Internationale Anmeldenummer: PCT/EP2011/068316
(87) Internationale Veröffentlichungsnummer: WO 2012/052504

(56) Entgegenhaltungen:
- EP-A1- 0 987 810
- WO-A1-01/63787
- WO-A1-2004/062130

## Beschreibung

Die Erfindung betrifft eine elektrische Vorrichtung für ein Powerline-System zur Datenübertragung und ein Powerline-System zur Datenübertragung und ein Kraftfahrzeug mit einem Powerline-System zur Datenübertragung.

Powerline-Systeme zur Datenübertragung werden zum Übertragen von Daten über ein Stromversorgungsnetz eingesetzt. In einem Powerline-System zur Datenübertragung kann auf ein vorlieben-des Spannungssignal ein Informationssignal aufgeprägt werden. Das Aufprägen des Informationssignals kann unabhängig von der Spannung und der Frequenz des Spannungssignals erfolgen. Die zu übertragenden Daten werden typischerweise mit einer vorgegebenen Trägerfrequenz moduliert und dem Spannungssignal des Stromversorgungsnetzes überlagert. Das Informationssignal kann beispielsweise an einer geeigneten Modemschnittstelle abgegriffen werden.

Die Dokumente WO 2004/062130 A1 und EP 0 987 810 A1 offenbaren aus dem Stand der Technik bekannte Varianten von Powerline-Systemen.

Eine Aufgabe, die der Erfindung zugrunde liegt, besteht darin, eine elektrische Vorrichtung für ein Powerline-System zur Datenübertragung und ein Powerline-System zur Datenübertragung zu schaffen, die einen sicheren Betrieb ermöglichen und kostengünstig realisierbar sind.

Die Aufgabe wird gelöst durch die Merkmale der unabhängigen Ansprüche. Vorteilhafte Ausgestaltungen der Erfindung sind in den Unteransprüchen gekennzeichnet.

Gemäß einem ersten Aspekt zeichnet sich die Erfindung aus durch eine elektrische Vorrichtung für ein Powerline-System zur Datenübertragung, mit mindestens einer Leitung eines Stromversorgungsnetzes, mindestens einer Signalleitung, und einem Kopplungsbereich, in dem die mindestens eine Leitung des Stromversorgungsnetzes und die mindestens eine Signalleitung teilweise angeordnet sind. Die mindestens eine Leitung des Stromversorgungsnetzes und die mindestens eine Signalleitung sind in dem Kopplungsbereich voneinander galvanisch getrennt und miteinander kapazitiv gekoppelt.

Eine galvanische Trennung und eine kapazitive Kopplung der mindestens einen Leitung des Stromversorgungsnetzes und der mindestens einen Signalleitung haben den Vorteil, dass die mindestens eine Leitung des Stromversorgungsnetzes und die mindestens eine Signalleitung unterschiedliche Spannungsniveaus haben können. Insbesondere kann die Signalleitung als Niederspannungsleitung ausgebildet sein. Damit kann die Signalleitung kleine Dimensionen und damit eine geringe Masse haben. Damit kann der Bauraum für die Signalleitung klein gehalten werden. Damit können geringe Kosten der Signalleitung erreicht werden. Durch die Ausbildung der Signalleitung als Niederspannungsleitung kann eine hohe Sicherheit der elektrischen Vorrichtung erreicht werden.

Vorteilhafterweise kann die elektrische Vorrichtung beispielsweise in einem Kraftfahrzeug eingesetzt werden, insbesondere in einem Kraftfahrzeug mit Hybrid- oder Elektroantrieb. Die Leitung des Stromversorgungsnetzes ist vorzugsweise ausgebildet zum Führen eines Ladestroms zum Laden einer Fahrzeugbatterie. In Kraftfahrzeugen, insbesondere in Hybridoder Elektrofahrzeugen kann die Datenübertragung insbesondere für die Übertragung von Betriebsparametern und/oder Ladeparametern genutzt werden. Insbesondere kann das Powerline-System zur Datenübertragung für die Übertragung von Parametern zum Ladezustand einer Fahrzeugbatterie eingesetzt werden. Die zu übertragenden Daten werden mit einer vorgegebenen Trägerfrequenz moduliert und dem Spannungssignal des Stromversorgungsnetzes überlagert. Das Informationssignal kann beispielsweise an einer geeigneten Modemschnittstelle abgegriffen werden.

In einer vorteilhaften Ausgestaltung sind die mindestens eine Leitung des Stromversorgungsnetzes und die mindestens eine Signalleitung in dem Kopplungsbereich mindestens teilweise zueinander parallel angeordnet. Dies hat den Vorteil, dass die Leitung des Stromversorgungsnetzes und die Signalleitung in einfacher Weise zueinander angeordnet sein können und eine gute kapazitive Kopplung zwischen der Leitung des Stromversorgungsnetzes und der Signalleitung erreicht werden kann.

Erfingdungsgemäß sind die mindestens eine Leitung des Stromversorgungsnetzes und die mindestens eine Signalleitung in dem Kopplungsbereich mindestens teilweise miteinander verdrillt. Dies hat den Vorteil, dass die Leitung des Stromversorgungsnetzes und die Signalleitung in sicherer Weise miteinander mechanisch gekoppelt sein können und eine gute kapazitive Kopplung zwischen der Leitung des Stromversorgungsnetzes und der Signalleitung erreicht werden kann.

In einer weiteren vorteilhaften Ausgestaltung weist die elektrische Vorrichtung ein Gehäuse auf, und der Kopplungsbereich ist innerhalb des Gehäuses angeordnet. An dem Gehäuse ist ein elektrischer Steckverbinder angeordnet, und der elektrische Steckverbinder ist mittels der mindestens einen Signalleitung mit dem Kopplungsbereich elektrisch gekoppelt. Dies hat den Vorteil, dass der elektrische Steckverbinder für die Signalleitung als Niederspannungsstecker ausgebildet sein kann. Damit kann der elektrische Steckverbinder klein dimensioniert und kostengünstig ausgebildet sein. Des Weiteren können die Sicherheitsmaßnahmen für den Niederspannungsstecker klein gehalten werden.

In einer weiteren vorteilhaften Ausgestaltung weist die elektrische Vorrichtung einen Stecker auf. Der Stecker weist ein Gehäuse auf, und der Kopplungsbereich ist innerhalb des Gehäuses des Steckers angeordnet. Dies hat den Vorteil, dass bei einer Konfektionierung des Steckers die galvanische Trennung und die kapazitive Kopplung der beiden elektrischen Leitungen zeitgleich und mit geringem Aufwand in einfacher Weise realisiert werden können.

In einer weiteren vorteilhaften Ausgestaltung weist die elektrische Vorrichtung eine Buchse auf. Die Buchse weist ein Gehäuse auf, und der Kopplungsbereich ist innerhalb des Gehäuses der Buchse angeordnet. Dies hat den Vorteil, dass bei einer Konfektionierung der Buchse die galvanische Trennung und die kapazitive Kopplung der beiden elektrischen Leitungen zeitgleich und mit geringem Aufwand in einfacher Weise realisiert werden können.

Gemäß einem zweiten Aspekt zeichnet sich die Erfindung aus durch ein Powerline-System zur Datenübertragung, mit einer elektrischen Vorrichtung gemäß dem ersten Aspekt der Erfindung.

Vorteilhafterweise kann das Powerline-System zur Datenübertragung beispielsweise in einem Kraftfahrzeug eingesetzt werden, insbesondere in einem Kraftfahrzeug mit Hybrid- oder Elektroantrieb.

In einer vorteilhaften Ausgestaltung gemäß dem zweiten Aspekt der Erfindung weist das Powerline-System ein Modem auf. Die mindestens eine Signalleitung ist mit dem Modem elektrisch gekoppelt. Da die Signalleitung als Niederspannungsleitung ausgebildet sein kann, kann das Modem als Niederspannungskomponente ausgebildet sein. Dies ermöglicht eine Ausführung des Modems mit einem kleinen Bauraum. Damit kann das Modem kostengünstig ausgebildet sein.

Ausführungsbeispiele der Erfindung sind im Folgenden anhand der schematischen Zeichnungen näher erläutert. Es zeigen:
- Figur 1: eine schematische Ansicht eines Powerline-Systems zur Datenübertragung in einer ersten Ausgestaltung, und
- Figur 2: eine schematische Ansicht des Powerline-Systems zur Datenübertragung in einer weiteren Ausgestaltung.

Elemente gleicher Konstruktion oder Funktion sind figurenübergreifend mit den gleichen Bezugszeichen versehen.

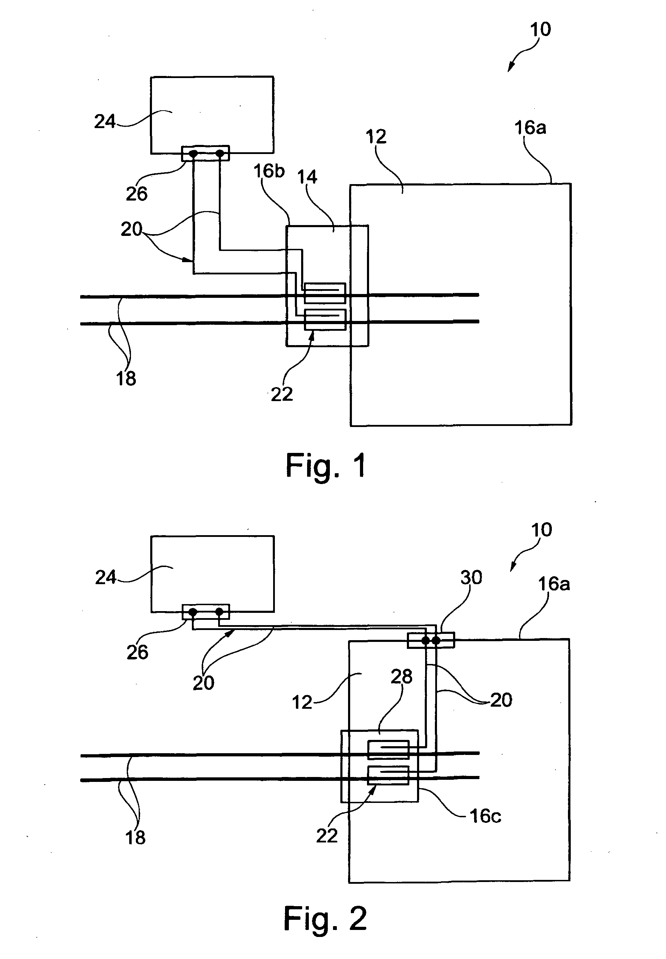

Die Figuren zeigen jeweils ein Powerline-System 10 zur Datenübertragung. Das Powerline-System 10 zur Datenübertragung hat eine oder mehrere elektrische Vorrichtungen. Das Powerline-System 10 zur Datenübertragung weist eine elektrische Komponente 12 auf. Die elektrische Komponente 12 hat ein Gehäuse 16a. Das Powerline-System 10 zur Datenübertragung der Figur 1 hat einen Stecker 14. Der Stecker 14 hat ein weiteres Gehäuse 16b.

Das Powerline-System 10 zur Datenübertragung weist weiter zwei Leitungen 18 eines Stromversorgungsnetzes und zwei Signalleitungen 20 auf. In weiteren Ausführungsformen kann das Powerline-System 10 zur Datenübertragung auch nur eine Leitung 18 des Stromversorgungsnetzes beziehungsweise nur eine Signalleitung 20 aufweisen. Das Powerline-System 10 zur Datenübertragung kann auch mehr als zwei Leitungen 18 des Stromversorgungsnetzes beziehungsweise mehr als zwei Signalleitungen 20 aufweisen.

In der in Figur 1 gezeigten Ausführungsform sind die Leitungen 18 des Stromversorgungsnetzes und die Signalleitungen 20 teilweise in dem Gehäuse 16b des Steckers 14 angeordnet. Die Leitungen 18 des Stromversorgungsnetzes und die Signalleitungen 20 sind voneinander galvanisch getrennt. Innerhalb des Gehäuses 16b des Steckers 14 sind zwei Kopplungsbereiche 22 ausgebildet, in denen die Leitungen 18 des Stromversorgungsnetzes und die Signalleitungen 20 miteinander kapazitiv gekoppelt sind. Insbesondere ist eine der Leitungen 18 des Stromversorgungsnetzes mit einer der Signalleitungen 20 und eine weitere der Leitungen 18 des Stromversorgungsnetzes mit einer weiteren der Signalleitungen 20 kapazitiv gekoppelt. Innerhalb des Gehäuses 16b des Steckers 14 ist in den Kopplungsbereichen 22 jeweils eine der Leitungen 18 des Stromversorgungsnetzes jeweils parallel zu einer der Signalleitungen 20 angeordnet. In weiteren Ausführungsformen des Steckers 14 ist in den Kopplungsbereichen 22 jeweils eine der Leitungen 18 des Stromversorgungsnetzes mit einer der Signalleitungen 20 verdrillt, wodurch eine mechanisch besonders sichere Verbindung zwischen der Leitung 18 des Stromversorgungsnetzes und der Signalleitung 20 erreicht werden kann.

Das Powerline-System 10 zur Datenübertragung hat weiter ein Modem 24. Das Modem 24 ist dazu ausgebildet, die Daten, die über die Leitungen 18 des Stromversorgungsnetzes und die Signalleitungen 20 übertragen werden, auszukoppeln und/oder einzukoppeln und zu modulieren und/oder zu demodulieren. Das Powerline-System 10 zur Datenübertragung umfasst einen elektrischen Steckverbinder 26, der vorzugsweise an dem Modem 24 angeordnet ist. Mittels des elektrischen Steckverbinders 26 sind die Signalleitungen 20 mit dem Modem 24 elektrisch gekoppelt.

Die in Figur 2 gezeigte Ausführungsform des Powerline-Systems 10 zur Datenübertragung weist eine Buchse 28 auf. Die Buchse 28 ist als Gerätebuchse ausgebildet und in dem Gehäuses 16a der elektrischen Komponente 12 angeordnet. Die Buchse 28 hat ein weiteres Gehäuse 16c, in dem die zwei Leitungen 18 des Stromversorgungsnetzes und die zwei Signalleitungen 20 teilweise angeordnet sind. Innerhalb des Gehäuses 16c der Buchse 28 sind zwei Kopplungsbereiche 22 ausgebildet, in denen jeweils eine der Leitungen 18 des Stromversorgungsnetzes mit jeweils einer der Signalleitungen 20 kapazitiv gekoppelt ist.

An dem Gehäuse 16a der elektrischen Komponente 12 ist ein elektrischer Steckverbinder 30 angeordnet. Der elektrische Steckverbinder 30 ist über die Signalleitungen 20 mit den Kopplungsbereichen 22 elektrisch gekoppelt. Die Signalleitungen 20 werden von dem elektrischen Steckverbinder 30 der elektrischen Komponente 12 weiter zu dem elektrischen Steckverbinder 26 des Modems 24 geführt. Damit sind die Kopplungsbereiche 22 in einfacher Weise mit dem Modem 24 elektrisch gekoppelt.

Durch die galvanische Trennung und die kapazitive Kopplung jeweils einer der Leitungen 18 des Stromversorgungsnetzes mit jeweils einer der Signalleitungen 20 kann erreicht werden, dass die Signalleitungen 20 auf einem niedrigeren Spannungsniveau liegen als die Leitungen 18 des Stromversorgungsnetzes. Damit können die Signalleitungen 20 klein ausgebildet sein und eine geringe Masse aufweisen. Des Weiteren kann der Bauraum für die Signalleitungen 20 klein sein. Auch können die Kosten für die Signalleitungen 20 klein sein. Ein weiterer Vorteil des Powerline-Systems 10 zur Datenübertragung besteht darin, dass aufgrund des niedrigen Spannungsniveaus an den Signalleitungen 20 eine hohe Sicherheit des Powerline-Systems 10 zur Datenübertragung erreicht werden kann. Darüber hinaus kann der elektrische Steckverbinder 26 des Modems 24 als Niederspannungskomponente ausgebildet sein. Damit kann der elektrische Steckverbinder 26 des Modems 24 einen geringen Bauraum haben. Damit können die Kosten für den elektrischen Steckverbinder 26 des Modems 24 klein gehalten werden.

Die in Figur 2 gezeigte Ausführungsform des Powerline-Systems 10 zur Datenübertragung hat insbesondere den Vorteil, dass der elektrische Steckverbinder 30 in dem Gehäuse 16a der elektrischen Komponente 12 als Niederspannungsstecker ausgebildet sein kann und für die Übertragung weiterer Signale genutzt werden kann. Der elektrische Steckverbinder 26 kann damit ebenfalls kostengünstig ausgebildet sein. Des Weiteren kann die Signalleitung 20 zwischen dem elektrischen Steckverbinder 30 in dem Gehäuse 16a und dem elektrischen Steckverbinder 26 des Modems 24 als Niederspannungskomponente ausgebildet sein und einen geringen Bauraum aufweisen.

Vorzugsweise ist das Powerline-System 10 zur Datenübertragung ausgebildet für ein Hybrid- oder Elektrofahrzeug. Ist das Powerline-System 10 zur Datenübertragung ausgebildet für ein Hybrid- oder Elektrofahrzeug, so sind die Leitungen 18 vorzugsweise zum Führen eines Ladestroms ausgebildet. Die zum Führen eines Ladestroms ausgebildeten Leitungen 18 sind vorzugsweise mit einer (nicht dargestellten) Fahrzeugbatterie elektrisch gekoppelt. Des Weiteren ermöglicht die galvanische Trennung und kapazitive Kopplung der Leitungen 18, 20 in diesem Fall den Betrieb der zum Führen eines Ladestroms ausgebildeten Leitungen 18 beispielsweise mit einer Spannung von 110 bis 600 Volt, während die Signalleitungen 20 beispielsweise auf einem Spannungsniveau von 12V, 24 V oder 36 V betrieben werden können. Da die Größe des Bauraums und das Gewicht von Komponenten in Hybrid- oder Elektrofahrzeugen eine sehr wichtige Rolle spielen, können sich die Vorteile einer geringen Masse und eines kleinen Bauraums der Signalleitungen 20 in Powerline-Systemen 10 zur Datenübertragung, die für Hybrid- oder Elektrofahrzeuge ausgebildet sind, besonders günstig auswirken.

Im Folgenden soll die Funktion des Powerline-Systems 10 zur Datenübertragung kurz beschrieben werden:
In einem ersten Betriebsfall kann das Modem 24 vorzugsweise dazu dienen, Daten in das Powerline-System 10 zur Datenübertragung einzukoppeln. Dazu kann das Modem 24 beispielsweise mit Messsensoren zur Erfassung von Messdaten gekoppelt sein. Die erfassten Messsignale werden von den Messsensoren an das Modem 24 übertragen. Die Messsignale werden nun gegebenenfalls mittels des Modems 24 moduliert. Die resultierenden Signale werden über den elektrischen Steckverbinder 26 des Modems 24 auf die Signalleitungen 20 übertragen, und gelangen schließlich, gegebenenfalls über den elektrischen Steckverbinder 30 der elektrischen Komponente 12, zu dem Kopplungsbereich 22. In dem Kopplungsbereich 22 werden die Signale mittels kapazitiver Kopplung von den Signalleitungen 20 auf die Leitungen 18 des Stromversorgungsnetzes übertragen.

In einem zweiten Betriebsfall kann das Modem 24 vorzugsweise dazu dienen, Daten aus dem Powerline-System 10 zur Datenübertragung auszukoppeln. In dem Kopplungsbereich 22 werden Signale von den Leitungen 18 des Stromversorgungsnetzes mittels kapazitiver Kopplung auf die Signalleitungen 20 übertragen. Die Signale gelangen dann, gegebenenfalls über den elektrischen Steckverbinder 30 der elektrischen Komponente 12, über den elektrischen Steckverbinder 26 des Modems 24 zu dem Modem 24. Die Signale werden nun gegebenenfalls mittels des Modems 24 demoduliert, und können dann von dem Modem 24 an eine geeignete, nicht dargestellte Erfassungs- und/oder Auswertevorrichtung übertragen werden.

### Bezugszeichenliste

- 10: Powerline-System
- 12: elektrische Komponente
- 14: Stecker
- 16a, 16b, 16c: Gehäuse
- 18: Leitung eines Stromversorgungsnetzes
- 20: Signalleitung
- 22: Kopplungsbereich
- 24: Modem
- 26: elektrischer Steckverbinder von 24
- 28: Buchse
- 30: elektrischer Steckverbinder von 12

## Patentansprüche

1. Elektrische Vorrichtung für ein Powerline-System (10) zur Datenübertragung, mit
- mindestens einer Leitung (18) eines Stromversorgungsnetzes,
- mindestens einer Signalleitung (20), und
- einem Kopplungsbereich (22), in dem die mindestens eine Leitung (18) des Stromversorgungsnetzes und die mindestens eine Signalleitung (20) teilweise angeordnet sind,
wobei die mindestens eine Leitung (18) des Stromversorgungsnetzes und die mindestens eine Signalleitung (20) in dem Kopplungsbereich (22) voneinander galvanisch getrennt und miteinander kapazitiv gekoppelt sind,
**dadurch gekennzeichnet,**
**dass die mindestens eine Leitung (18) des Stromversorgungsnetzes und die mindestens eine Signalleitung (20) in dem Kopplungsbereich (22) mindestens teilweise miteinander verdrillt sind.**

2. Elektrische Vorrichtung nach Anspruch 1, wobei die mindestens eine Leitung (18) des Stromversorgungsnetzes und die mindestens eine Signalleitung (20) in dem Kopplungsbereich (22) mindestens teilweise zueinander parallel angeordnet sind.

3. Elektrische Vorrichtung nach einem der Ansprüche 1 bis 2, wobei die elektrische Vorrichtung ein Gehäuse (16a) aufweist, der Kopplungsbereich (22) innerhalb des Gehäuses (16a) angeordnet ist, und an dem Gehäuse (16a) ein elektrischer Steckverbinder (30) angeordnet ist, und der elektrische Steckverbinder (30) mittels der mindestens einen Signalleitung (20) mit dem Kopplungsbereich (22) elektrisch gekoppelt ist.

4. Elektrische Vorrichtung nach einem der Ansprüche 1 bis 2, wobei die elektrische Vorrichtung einen Stecker (14) aufweist, der Stecker (14) ein Gehäuse (16b) aufweist, und der Kopplungsbereich (22) innerhalb des Gehäuses (16b) des steckers (14) angeordnet ist.

5. Elektrische Vorrichtung nach einem der Ansprüche 1 bis 2, wobei die elektrische Vorrichtung eine Buchse (28) aufweist, die Buchse (28) ein Gehäuse (16c) aufweist, und der Kopplungsbereich (22) innerhalb des Gehäuses (16c) der Buchse (28) angeordnet ist.

6. Powerline-System (10) zur Datenübertragung, das eine elektrische Vorrichtung nach einem der vorhergehenden Ansprüche aufweist.

7. Powerline-System (10) nach Anspruch 6, das ein Modem (24) aufweist, wobei die mindestens eine Signalleitung (20) mit dem Modem (24) elektrisch gekoppelt ist.

8. Kraftfahrzeug, insbesondere Hybrid- oder Elektrofahrzeug, mit einem Powerline-System (10) gemäß einem der Ansprüche 6 oder 7, **dadurch gekennzeichnet,**
**dass** die Leitung (18) des Stromversorgungsnetzes zum Führen eines Ladestroms zum Laden einer Fahrzeugbatterie des Kraftfahrzeugs ausgebildet ist und
**dass** Parameter zum Ladezustand der Fahrzeugbatterie über die Signalleitung (20) übertragbar sind.

## Claims

1. An electrical device for a power line system (10) for data transmission, comprising
- at least one line (18) of a power supply network,
- at least one signal line (20) and
- a coupling region (22), in which the at least one line (18) of the power supply network and the at least one signal line (20) are partially arranged, wherein the at least one line (18) of the power supply network and the at least one signal line (20) in the coupling region (22) are galvanically isolated from one another and capacitively coupled to one another, **characterised in that** the at least one line (18) of the power supply network and the at least one signal line (20) in the coupling region (22) are at least partially twisted together.

2. An electrical device according to claim 1, wherein the at least one line (18) of the power supply network and the at least one signal line (20) in the coupling region (22) are arranged at least partially parallel to one another.

3. An electrical device according to either of claims 1 or 2, wherein the electrical device has a housing (16a), the coupling region (22) is arranged within the housing (16a), and an electrical plug connector (30) is arranged on the housing (16a), and the electrical plug connector (30) is electrically coupled to the coupling region (22) by means of the at least one signal line (20).

4. An electrical device according to either of claims 1 or 2, wherein the electrical device has a plug (14), the plug (14) has a housing (16b) and the coupling region (22) is arranged within the housing (16b) of the plug (14).

5. An electrical device according to either of claims 1 or 2, wherein the electrical device has a socket (28), the socket has a housing (16c) and the coupling region (22) is arranged within the housing (16c) of the socket (28).

6. A power line system (10) for data transmission, which has an electrical device according to any one of the preceding claims.

7. A power line system (10) according to claim 6, which has a modem (24), wherein the at least one signal line (20) is electrically coupled to the modem (24).

8. A motor vehicle, more especially a hybrid or electric vehicle, with a power line system (10) according to either of claims 6 or 7, **characterised in that** the line (18) of the power supply network is configured to carry a charging current to charge a vehicle battery of the motor vehicle and in a parameter for the charging state of the vehicle battery can be transmitted by means of the signal line (20).

## Revendications

1. Dispositif électrique pour un système de communication par courants porteurs (10) de façon à permettre la transmission de données comprenant :
- au moins une conduite (18) d'un réseau d'alimentation en courant,
- au moins une conduite d'acheminement de signaux (20), et
- une zone d'accouplement (22) dans laquelle la conduite (18) du réseau d'alimentation en courant et la conduite d'acheminement de signaux (20) sont partiellement situées, la conduite (18) du réseau d'alimentation en courant et la conduite d'acheminement de signaux (20) étant séparées galvaniquement l'une de l'autre dans la zone d'accouplement (22) et accouplées l'une à l'autre de manière capacitive,
**caractérisé en ce que**
la conduite (18) du réseau d'alimentation en courant et la conduite d'acheminement de signaux (20) sont au moins partiellement torsadées entre elles dans la zone d'accouplement (22).

2. Dispositif électrique conforme à la revendication 1, dans lequel la conduite (18) du réseau d'alimentation en courant et la conduite d'acheminement de signaux (20) sont au moins partiellement disposées parallèlement l'une à l'autre dans la zone d'accouplement (22).

3. Dispositif électrique conforme à l'une des revendications 1 et 2, dans lequel le dispositif électrique comporte un boitier (16a), la zone d'accouplement (22) est située à l'intérieur de ce boitier (16a), un élément de liaison électrique par enfichage (30) est monté dans le boitier (16a), et l'élément de liaison électrique par enfichage (30) est accouplé électriquement à la zone d'accouplement (22) par l'intermédiaire de la conduite d'acheminement de signaux (20).

4. Dispositif électrique conforme à l'une des revendications 1 et 2, dans lequel le dispositif électrique comporte une fiche mâle (14), cette fiche mâle (14) comporte un boitier (16b) et la zone d'accouplement (22) est située à la partie interne du boitier (16b) de la fiche mâle (14).

5. Dispositif électrique conforme à l'une des revendications 1 et 2, dans lequel le dispositif électrique comporte une douille (28), cette douille (28) comporte un boitier (16c) et la zone d'accouplement (22) est située à la partie interne du boitier (16c) de la douille (28).

6. Système de communication par courants porteurs (10) pour permettre la transmission de données comprenant un dispositif électrique conforme à l'une des revendications précédentes.

7. Système de communication par courants porteurs conforme à la revendication 6, qui comporte un modem (24), la conduite d'acheminement de signaux (20) étant accouplée électriquement à ce modem (24).

8. Véhicule, en particulier véhicule hybride ou véhicule électrique comprenant un système de communication par courants porteurs (10) conforme à l'une des revendications 6 et 7,
**caractérisé en ce que**
la conduite (18) du réseau d'alimentation en courant est réalisée pour permettre le transfert d'un courant de charge permettant de charger une batterie du véhicule, et
des paramètres indiquant l'état de charge de la batterie du véhicule peuvent être transférés par la conduite d'acheminement de signaux (20).
